Europäisches Patentamt

European Patent Office

Office européen des brevets

(19)

(11) **EP 0 863 451 B1**

(12) **FASCICULE DE BREVET EUROPEEN**

(45) Date de publication et mention
de la délivrance du brevet:
**20.06.2001   Bulletin 2001/25**

(51) Int Cl.⁷: **G05D 1/06**

(21) Numéro de dépôt: **98400359.0**

(22) Date de dépôt: **16.02.1998**

(54) **Procédé et dispositif pour vérifier la cohérence des mesures d'une sonde d'incidence**

Methode und Einrichtung zur Bestätigung der Kohärenz der Messungen einer Einfallswinkelsonde

Method and device for verifying the coherence of the measurements of an incidence probe

(84) Etats contractants désignés:
**DE GB**

(30) Priorité:  **03.03.1997  FR 9702482**

(43) Date de publication de la demande:
**09.09.1998   Bulletin 1998/37**

(73) Titulaire: **AEROSPATIALE MATRA**
**75016 Paris (FR)**

(72) Inventeur: **Le Tron, Xavier**
**31000 Toulouse (FR)**

(74) Mandataire: **Bonnetat, Christian**
**CABINET BONNETAT**
**29, rue de St. Pétersbourg**
**75008 Paris (FR)**

(56) Documents cités:
**WO-A-92/20052          FR-A- 2 628 858**
**US-A- 4 027 839         US-A- 4 235 104**
**US-A- 4 586 140         US-A- 4 590 475**
**US-A- 5 119 091**

## Description

La présente invention concerne un procédé pour vérifier la cohérence des mesures réalisées par au moins une sonde d'incidence montée sur un aéronef, ainsi qu'un dispositif pour la mise en oeuvre dudit procédé.

On sait que les mesures réalisées par une sonde d'incidence peuvent être utilisées par différents systèmes équipant ledit aéronef, et notamment par la commande de vol électrique dudit aéronef.

Généralement, un aéronef, par exemple un avion de transport civil, est muni d'une pluralité de sondes d'incidence. Dans ce cas, on sélectionne, par exemple à l'aide d'un moyen de vote, les mesures d'une desdites sondes d'incidence en vue de leur traitement par des systèmes utilisateurs équipant l'aéronef.

A titre d'exemple, lorsque l'aéronef est muni de trois sondes d'incidence surveillées simultanément par ledit moyen de vote, ce dernier sélectionne parmi les trois mesures réalisées par ces dernières celle présentant la valeur médiane.

De plus, dans ce cas, on déclare qu'une desdites sondes d'incidence est en panne, lorsque la valeur qu'elle délivre s'écarte de ladite valeur médiane de plus d'un facteur de seuil prédéfini. Ce type de contrôle de cohérence de mesures de capteurs est décrit, par exemple, dans le document FR 2 628 858.

Ce mode de détection de pannes ou d'incohérence des mesures des sondes d'incidence n'est pas entièrement satisfaisant, notamment en ce qui concerne sa fiabilité. En effet, lorsque dans le cas précité, deux des trois sondes d'incidence tombent en panne simultanément, par exemple en raison d'une collision de l'aéronef avec un groupe d'oiseaux, elles peuvent transmettre, à cause de leur balourd, les mêmes informations. Dans ce cas, le mode de détection de pannes usuel précité utilise comme justes et fiables les informations de ces deux sondes d'incidence en panne et déclare en panne la troisième sonde d'incidence qui continue à fonctionner normalement.

La présente invention a pour objet de remédier à ces inconvénients. Elle concerne un procédé fiable, de mise en oeuvre simple et rapide, permettant de vérifier la cohérence des mesures réalisées par au moins une sonde d'incidence montée sur un aéronef.

A cet effet, selon l'invention, ledit procédé est remarquable en ce que :

- on réalise au moins une mesure au moyen de ladite sonde d'incidence ;
- on calcule un premier coefficient de portance de l'aéronef à partir de ladite mesure et de données relatives à l'aéronef ;
- on calcule un second coefficient de portance de l'aéronef à partir d'informations disponibles sur ledit aéronef ;
- on calcule la différence entre lesdits premier et second coefficients de portance de l'aéronef ; et
- on en déduit :

  . si la différence ainsi calculée est inférieure à une valeur prédéfinie, que la mesure réalisée par la sonde d'incidence est cohérente ; et
  . sinon, que ladite mesure est incohérente.

Ainsi, grâce à l'invention, on obtient un contrôle efficace et fiable de la cohérence des mesures d'une sonde d'incidence, contrôle qui est notamment indépendant des mesures réalisées par les autres sondes d'incidence de l'aéronef et permet de remédier aux inconvénients précités.

De façon avantageuse, les données relatives à l'aéronef, qui sont utilisées dans le calcul du premier coefficient de portance, représentent des données aérodynamiques de l'aéronef et des données représentatives de sa configuration de vol.

De préférence, on utilise comme données représentatives de la configuration de vol, la position des becs, des volets et des aérofreins de l'aéronef, ainsi que le nombre de Mach de ce dernier.

En outre, de façon avantageuse, ledit second coefficient de portance $Cz_2$ est calculé à partir de la relation :

$$Cz_2 = (nz.m.g) / (0,5.Pd.S)$$

dans laquelle :

- $nz$ est le facteur de charge de l'aéronef ;
- $m$ est la masse de l'aéronef ;
- $g$ est l'accélération de la pesanteur ;
- $Pd$ est la pression dynamique ; et
- $S$ est une surface de référence de l'aéronef.

De plus, de façon avantageuse :

- le facteur de charge $nz$ est mesuré par un accéléromètre de l'aéronef ; et/ou
- la pression dynamique $Pd$ est mesurée par un anémomètre de l'aéronef.

En outre, dans une première variante, on utilise, comme masse $m$, la masse effective de l'aéronef, que l'on mesure, tandis que, dans une seconde variante, on utilise, comme masse $m$, la masse maximale de l'aéronef.

La présente invention s'applique plus particulièrement à un aéronef muni d'une pluralité de sondes d'incidence et d'un moyen de sélection pour sélectionner des mesures à partir des mesures réalisées par lesdites sondes d'incidence. Dans ce cas, ledit moyen de sélection peut notamment être un moyen de vote, tel que précité, ou un élément de calcul qui effectue par exemple la moyenne des différentes mesures réalisées par lesdites sondes d'incidence.

Selon l'invention, on vérifie alors uniquement la cohérence desdites mesures sélectionnées.

La présente invention concerne également un dispositif pour la mise en oeuvre du procédé précité.

Selon l'invention, ledit dispositif est remarquable en ce qu'il comporte :

- un premier moyen de calcul pour calculer ledit premier coefficient de portance ;
- un second moyen de calcul pour calculer ledit second coefficient de portance ; et
- une unité centrale pour vérifier la cohérence des mesures de la sonde d'incidence, à partir des calculs réalisés par lesdits premier et second moyens de calcul.

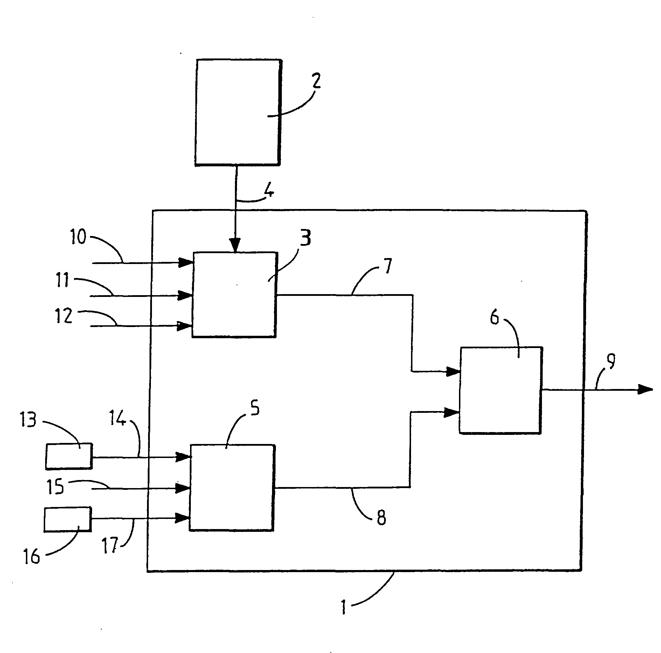

L'unique figure du dessin annexé fera bien comprendre comment l'invention peut être réalisée. Sur cette figure, on a représenté le schéma synoptique d'un dispositif conforme à l'invention.

Le dispositif 1 conforme à l'invention et représenté schématiquement sur la figure est destiné à vérifier la cohérence des mesures réalisées par au moins une sonde d'incidence 2 montée sur un aéronef non représenté.

A cet effet, ledit dispositif 1 comporte, selon l'invention :

- un moyen de calcul 3 relié par une liaison 4 à ladite sonde d'incidence 2 et destiné à calculer un premier coefficient de portance de l'aéronef, comme précisé ci-dessous ;
- un moyen de calcul 5 destiné à calculer un second coefficient de portance de l'aéronef, comme également précisé ci-dessous ; et
- une unité centrale 6 reliée respectivement par l'intermédiaire de liaisons 7 et 8 auxdits moyens de calcul 3 et 5, susceptible de vérifier la cohérence des mesures effectuées par ladite sonde d'incidence 2, à partir des calculs réalisés par lesdits moyens de calcul 3 et 5, et de transmettre le résultat par une liaison 9 à un dispositif utilisateur non représenté.

Pour calculer ledit premier coefficient de portance, les moyens de calcul 3 utilisent, selon l'invention, comme données relatives à l'aéronef, d'une part, des données aérodynamiques de l'aéronef qui sont de préférence stockées dans lesdits moyens de calcul 3 et, d'autre part, des données représentatives de la configuration de vol dudit aéronef.

Plus précisément, comme données représentatives de la configuration de vol, les moyens de calcul 3 reçoivent, respectivement de dispositifs connus, montés sur l'aéronef et non représentés :

- par l'intermédiaire d'une liaison 10, la position des becs et des volets de l'aéronef ;

- par l'intermédiaire d'une liaison 11, la position des aérofreins de l'aéronef ; et
- par l'intermédiaire d'une liaison 12, le nombre de Mach dudit aéronef.

De préférence, ledit premier coefficient de portance est déterminé au moyen de tables connues contenant des valeurs discrètes de coefficients de portance. De façon connue, il existe une pluralité de tables différentes dépendant des données précitées représentatives de la configuration de vol. Par conséquent, on choisit la table appropriée et on calcule le premier coefficient de portance par interpolation à partir des valeurs de ladite table choisie.

Par ailleurs, les moyens de calcul 5 déterminent ledit second coefficient de portance Cz2 à partir de la relation :

$$Cz2 = (nz.m.g) / (0,5.Pd.S)$$

dans laquelle :

- nz est le facteur de charge de l'aéronef, qui est mesuré par un accéléromètre 13 relié par une liaison 14 au moyen de calcul 5 ;
- m est la masse de l'aéronef, précisée ci-dessous et reçue par une liaison 15 ;
- g est l'accélération de la pesanteur ;
- Pd est la pression dynamique qui est mesurée par un anémomètre 16 relié par une liaison 17 au moyen de calcul 5 ; et
- S est une surface de référence de l'aéronef.

Dans un premier mode de réalisation, le moyen de calcul 5 utilise comme masse m la masse effective de l'aéronef qui est déterminée par un moyen approprié non représenté, tandis que dans un second mode de réalisation, en particulier lorsque la masse effective de l'aéronef n'est pas disponible, ledit moyen de calcul 5 utilise comme masse m la masse maximale dudit aéronef.

Par ailleurs, l'unité centrale 6 :

- calcule la différence entre lesdits premier et second coefficients de portance de l'aéronef, reçus respectivement desdits moyens de calcul 3 et 5 ; et
- en déduit :

  . si la différence ainsi calculée est inférieure à une valeur prédéfinie, que la mesure réalisée par la sonde d'incidence est cohérente ;
  . sinon, que ladite mesure est incohérente.

Selon l'invention, ladite valeur prédéfinie est déterminée en fonction des caractéristiques de l'aéronef. Généralement, on utilise une valeur comprise entre 0,1 et 0,3, ces valeurs étant sans dimension lorsque l'on utilise, au lieu de l'accélération verticale, le rapport entre cette dernière et l'accélération de la pesanteur.

Bien entendu, la présente invention s'applique également à un aéronef muni d'une pluralité de sondes d'incidence 2 et d'un moyen de sélection non représenté pour sélectionner des mesures à partir desdites mesures réalisées par les sondes d'incidence. Ledit moyen de sélection peut être un moyen de vote qui choisit les mesures réalisées par l'une desdites sondes d'incidence 2 ou un élément de calcul qui effectue la moyenne des mesures réalisées par toutes les sondes d'incidence 2.

Dans ce cas, selon l'invention, dans un mode de réalisation préféré, on vérifie au moyen dudit dispositif 1 uniquement la cohérence des mesures ainsi sélectionnées.

A cet effet, la liaison 4 est reliée directement à la sortie dudit moyen de sélection.

**Revendications**

1. Procédé pour vérifier la cohérence des mesures réalisées par au moins une sonde d'incidence (2) montée sur un aéronef, caractérisé en ce que :

   - on réalise au moins une mesure au moyen de ladite sonde d'incidence (2) ;
   - on calcule un premier coefficient de portance de l'aéronef à partir de ladite mesure et de données relatives à l'aéronef ;
   - on calcule un second coefficient de portance de l'aéronef à partir d'informations disponibles sur ledit aéronef ;
   - on calcule la différence entre lesdits premier et second coefficients de portance de l'aéronef ; et
   - on en déduit :

     . si la différence ainsi calculée est inférieure à une valeur prédéfinie, que la mesure réalisée par la sonde d'incidence est cohérente ; et
     . sinon, que ladite mesure est incohérente.

2. Procédé selon la revendication 1, caractérisé en ce que les données relatives à l'aéronef, qui sont utilisées dans le calcul dudit premier coefficient de portance, représentent des données aérodynamiques de l'aéronef et des données représentatives de sa configuration de vol.

3. Procédé selon la revendication 2, caractérisé en ce que l'on utilise, comme données représentatives de la configuration de vol, la position des becs, des volets et des aérofreins de l'aéronef, ainsi que le nombre de Mach de ce dernier.

4. Procédé selon l'une quelconque des revendications 1 à 3, caractérisé en ce que ledit second coefficient de portance Cz2 est calculé à partir de la relation :

$$Cz2 = (nz.m.g) / (0,5.Pd.S)$$

dans laquelle :

   - nz est le facteur de charge de l'aéronef ;
   - m est la masse de l'aéronef ;
   - g est l'accélération de la pesanteur ;
   - Pd est la pression dynamique ; et
   - S est une surface de référence de l'aéronef.

5. Procédé selon la revendication 4, caractérisé en ce que ledit facteur de charge nz est mesuré par un accéléromètre (13) de l'aéronef.

6. Procédé selon l'une des revendications 4 ou 5, caractérisé en ce que ladite pression dynamique Pd est mesurée par un anémomètre (16) de l'aéronef.

7. Procédé selon l'une quelconque des revendications 4 à 6, caractérisé en ce que l'on utilise, comme masse m, la masse effective de l'aéronef, que l'on mesure.

8. Procédé selon l'une quelconque des revendications 4 à 6, caractérisé en ce que l'on utilise, comme masse m, la masse maximale de l'aéronef.

9. Procédé selon l'une quelconque des revendications précédentes, pour un aéronef muni d'une pluralité de sondes d'incidence (2) et d'un moyen de sélection pour sélectionner des mesures à partir des mesures réalisées par lesdites sondes d'incidence (2), caractérisé en ce que l'on vérifie uniquement la cohérence desdites mesures sélectionnées.

10. Dispositif pour la mise en oeuvre du procédé spécifié sous l'une quelconque des revendications 1 à 9, caractérisé en ce qu'il comporte :

   - un premier moyen de calcul (3) pour calculer ledit premier coefficient de portance ;
   - un second moyen de calcul (5) pour calculer ledit second coefficient de portance ; et
   - une unité centrale (6) pour vérifier la cohérence des mesures de la sonde d'incidence (2), à partir des calculs réalisés par lesdits premier et second moyens de calcul (3, 5).

**Patentansprüche**

1. Methode zur Bestätigung der Kohärenz der mit mindestens einer an einem Flugzeug angebrachten Einfallswinkelsonde (2) durchgeführten Messungen,
   dadurch gekennzeichnet, daß:

   - mindestens eine Messung mittels der genannten Einfallswinkelsonde (2) durchgeführt wird;
   - ausgehend von der genannten Messung und Daten zum Flugzeug ein erster Auftriebskoeffizient des Flugzeugs berechnet wird;
   - ausgehend von verfügbaren Daten zum genannten Flugzeug ein zweiter Auftriebskoeffizient des Flugzeugs berechnet wird;
   - die Differenz zwischen dem genannten ersten und dem genannten zweiten Auftriebskoeffizienten des Flugzeuges berechnet wird; und
   - daraus abgeleitet wird:

     • daß die von der Einfallswinkelsonde durchgeführte Messung, wenn die so berechnete Differenz unter einem vorher festgelegten Wert liegt, kohärent ist; und,
     • daß die genannte Messung inkohärent ist, wenn sie nicht unter diesem Wert liegt.

2. Methode nach Anspruch 1,
   dadurch gekennzeichnet, daß die Daten zum Flugzeug, die bei der Berechnung des genannten ersten Auftriebskoeffizienten verwendet werden, aerodynamischen Daten des Flugzeugs und für seine Flugkonfiguration repräsentative Daten darstellen.

3. Methode nach Anspruch 2,
   dadurch gekennzeichnet, daß als repräsentative Daten der Flugkonfiguration die Stellung der Vorflügel, der Klappen und der Luftbremsen des Flugzeugs sowie die Machzahl des Flugzeugs verwendet werden.

4. Methode nach einem beliebigen der Ansprüche 1 bis 3,
   dadurch gekennzeichnet, daß der genannte zweite Auftriebskoeffizient Cz2 ausgehend von der Relation

   $$Cz2 = (nz.m.g) / (0,5.Pd.S)$$

   berechnet wird,
   in der:

   - nz das Lastvielfache des Flugzeugs;
   - m die Masse des Flugzeugs;
   - g die Gravitationsbeschleunigung;
   - Pd der dynamische Druck; und

   - S eine Bezugsfläche des Flugzeugs ist.

5. Methode nach Anspruch 4,
   dadurch gekennzeichnet, daß das genannte Lastvielfache nz mit einem Beschleunigungsmesser (13) des Flugzeugs gemessen wird.

6. Methode nach einem der Ansprüche 4 oder 5,
   dadurch gekennzeichnet, daß der genannte dynamische Druck Pd mit einem Luftgeschwindigkeitsmesser (16) des Flugzeugs gemessen wird.

7. Methode nach einem beliebigen der Ansprüche 4 bis 6,
   dadurch gekennzeichnet, daß als Masse m die tatsächliche Masse des Flugzeugs, die gemessen wird, verwendet wird.

8. Methode nach einem beliebigen der Ansprüche 4 bis 6,
   dadurch gekennzeichnet, daß als Masse m die maximale Masse des Flugzeugs verwendet wird.

9. Methode nach einem beliebigen der vorstehenden Ansprüche bei einem Flugzeug, das mit mehreren Einfallswinkelsonden (2) und einem Auswahlmittel zum Auswählen von Messungen aus den von den genannten Einfallswinkelsonden (2) durchgeführten Messungen ausgerüstet ist,
   dadurch gekennzeichnet, daß lediglich die Kohärenz der genannten ausgewählten Messungen bestätigt wird.

10. Einrichtung zur Umsetzung der unter einem beliebigen der Ansprüche 1 bis 9 spezifizierten Methode,
    dadurch gekennzeichnet, daß sie folgendes umfaßt:

    - ein erstes Rechenmittel (3) zur Berechnung des genannten ersten Auftriebskoeffizienten;
    - ein zweites Rechenmittel (5) zur Berechnung des genannten zweiten Auftriebskoeffizienten;
    - eine Zentraleinheit (6) zur Bestätigung der Kohärenz der Messungen der Einfallswinkelsonde (2) ausgehend von durch die genannten ersten und zweiten Rechenmittel (3, 5) durchgeführten Berechnungen.

**Claims**

1. Process for verifying the consistency of the measurements made by at least one angle-of-attack probe (2) mounted on an aircraft,
   characterized in that:

   - at least one measurement is made by means of the said angle-of-attack probe (2);

- a first coefficient of lift of the aircraft is computed from the said measurement and from data relating to the aircraft;
- a second coefficient of lift of the aircraft is computed from information available about the said aircraft;
- the difference is computed between the said first and second coefficients of lift of the aircraft; and
- from this is deduced:

  . if the difference thus computed is less than a predefined value, that the measurement made by the angle-of-attack probe is consistent; and
  . otherwise, that the said measurement is inconsistent.

2. Process according to Claim 1, characterized in that the data relating to the aircraft, which are used in computing the said first coefficient of lift, represent aerodynamic data of the aircraft and data representative of its flight configuration.

3. Process according to Claim 2, characterized in that the position of the slats, of the flaps and of the airbrakes of the aircraft, together with the latter's Mach number are used as data representative of the flight configuration.

4. Process according to any one of Claims 1 to 3, characterized in that the said second coefficient of lift Cz2 is computed from the relation:

$$Cz2 = (nz.m.g) / (0.5.Pd.S)$$

in which:

- nz is the load factor of the aircraft;
- m is the mass of the aircraft;
- g is the acceleration due to gravity;
- Pd is the dynamic pressure; and
- S is a reference surface area of the aircraft.

5. Process according to Claim 4, characterized in that the said load factor nz is measured by an accelerometer (13) of the aircraft.

6. Process according to either of Claims 4 and 5, characterized in that the said dynamic pressure Pd is measured by an anemometer (16) of the aircraft.

7. Process according to Claims 4. to 6, characterized in that the effective mass of the aircraft, which is measured, is used as mass m.

8. Process according to Claims 4 to 6, characterized in that the maximum mass of the aircraft is used as mass m.

9. Process according to any one of the preceding claims, for an aircraft fitted with a plurality of angle-of-attack probes (2) and with a means of selection for selecting measurements from measurements made by the said angle-of-attack probes (2), characterized in that only the consistency of the said selected measurements is verified.

10. Device for implementing the process specified under any one of Claims 1 to 9, characterized in that it includes:

- a first computing means (3) for computing the said first coefficient of lift;
- a second computing means (5) for computing the said second coefficient of lift; and
- a central unit (6) for verifying the consistency of the measurements of the angle-of-attack probe (2), on the basis of the computations made by the said first and second computing means (3, 5).